# EUROPEAN PATENT SPECIFICATION

(11) **EP 3 688 218 B1**
(45) Date of publication and mention of the grant of the patent: **22.03.2023**
(21) Application number: 18773576.6
(22) Date of filing: 14.09.2018
(51) Int. Cl.: D06F 39/02, A47L 15/44

(54) **A DISPENSING MECHANISM FOR DISPENSING TABLETS OF A WASHING PRODUCT**
ABGABEMECHANISMUS ZUR ABGABE VON TABLETTEN EINES WASCHMITTELS
MÉCANISME DE DISTRIBUTION POUR DISTRIBUER DES COMPRIMÉS D'UN PRODUIT DE LAVAGE

(30) Priority: 27.09.2017 GB 201715659
(43) Date of publication of application: 05.08.2020
(73) Proprietor: Reckitt Benckiser Vanish B.V., 2132 WT Hoofddorp (NL)
(72) Inventor: CAPUTO, Pietro, IT-30034 Mira VE (IT); CHU, Deney, Mong, Ming, IT-30034 Mira VE (IT)
(74) Representative: Paredes Rojas, José Francisco
(86) International application number: PCT/GB2018/052620
(87) International publication number: WO 2019/063971

(56) References cited:
- EP-A1- 1 159 913
- DE-A1- 19 636 417
- JP-A- S63 181 793
- KR-A- 20030 048 505

## Description

The present invention relates to a dispensing mechanism for dispensing tablets of a washing product. The product may be a detergent or a laundry additive (e.g. bleach or fabric softener).

It is particularly designed for a washing machine. In such machines the washing product may be dispensed directly into a washing drum. However, washing machines are also provided with a drawer mechanism into which detergent is placed by a user. The detergent may be in a number of physical forms including powder, tablet, liquid or liquid capsule.

Document KR 2003 0048505 A discloses a dispensing mechanism for dispensing catalyst tablets into a washing machine, the cartridge comprising: a storage module containing a plurality of tablets of catalyst and a dispensing module for selectively dispensing the tablets from the storage module. The storage module having an opening in its lowermost surface and an inclined floor to cause the catalyst tablets to move towards the opening under gravity. In this document the storage module is fixedly attached to the dispensing module.

These dispensing methods all suffer from a number of problems in that a number of these allow the possibility of the user coming into contact with the washing product which is generally best avoided as it is messy and potentially harmful. Further, the use of tablets and capsules provides no active control during the washing cycle of the release of the product.

The present invention addresses these problems.

According to the present invention there is provided a dispensing mechanism for dispensing tablets of washing product into a washing machine as set out in claim 1.

By providing the tablets in a storage module, the user can be protected from coming into contact with these during the dispensing operation. Further, by housing a plurality of tablets within the storage module, there is no need for a user to add more product to the machine for each separate washing cycle as the module can be arranged to dispense across a number of washing cycles. Also, the fact that the dispensing is determined by a screw dispenser which is selectively operable means that the tablets can be dispensed into the washing machine at optimum times during the washing cycle.

The dispensing module may be integrated into the washing machine. Alternatively the dispensing mechanism may be designed as a stand-alone cartridge which can be placed into the drawer of a washing machine. In this case, the dispensing module is preferably provided with an attachment means for attachment to the washing machine. This may, for example, be in the form of a hook which is designed to hook onto a complimentary part of a drawer in the washing machine. Because the storage module is releasably attachable to the dispensing module, once in place the dispensing module can be left in situ and the storage module can be removed and either refilled or replaced.

The opening in the storage module is preferably provided with a closure. This may be in the form of a removable cap or the like to prevent the tablets from falling out during storage and transportation, to prevent moisture reaching the tablets and to prevent the user from coming into contact with the tablets. Preferably, however, the opening is covered by a pierceable membrane and the dispensing module is provided with a piercing element to piece the membrane. This ensures that the tablets are not exposed to the external environment until the dispensing module is attached to the storage module. Preferably the piercing member is in the form of a raised edge surrounding the opening. The raised edge preferably extends further on one side of the opening than the other so as to provide a progressive cutting effect on the membrane.

The screw dispenser may be rotated through a number of predetermined turns in order to dispense a predetermined number of tablets. Preferably, however, a sensor is provided to detect the number of tablets which have actually been dispensed. This may be coupled to a controller which is configured to continue to operate the screw dispenser until the required number of tablets have been dispensed.

The tablets may be sized with the intention to dispense one per wash cycle. However, preferably they are sized to require several per washing cycle. This allows flexibility to add additional tablets at appropriate points in the wash cycle.

The dispensing module may be couplable to a power supply within the washing machine. However, in the case of the stand-alone module, the dispensing mechanism is preferably provided with a battery to provide power to the motor.

The dispensing mechanism is preferably connectable to a remote device, via, for example, WIFI or Bluetooth. This allows the device to communicate with a washing machine controller and/or a remote user interface such as a mobile phone or tablet.

The dispensing mechanism may comprise two or more storage modules each having an associated dispensing module, wherein each storage module contains a different washing product. This allows different products to be dispensed at different points in the washing cycle.

An example of a dispensing mechanism will now be described with reference to the accompanying drawings, in which:
Fig. 1 is a schematic cross section through the dispensing mechanism in the drawer;

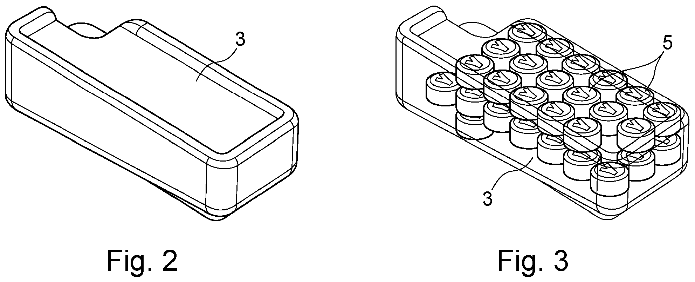

Fig. 2 is a perspective view of the storage module;
Fig. 3 is a similar view to Fig. 2 with the housing shown to be transparent to show the tablets within the module prior to use;
Fig. 4 is a perspective view of the drawer of a washing machine and the dispensing module prior to insertion;
Fig. 5 is a view similar to Fig. 4 showing the attachment of the storage module; and

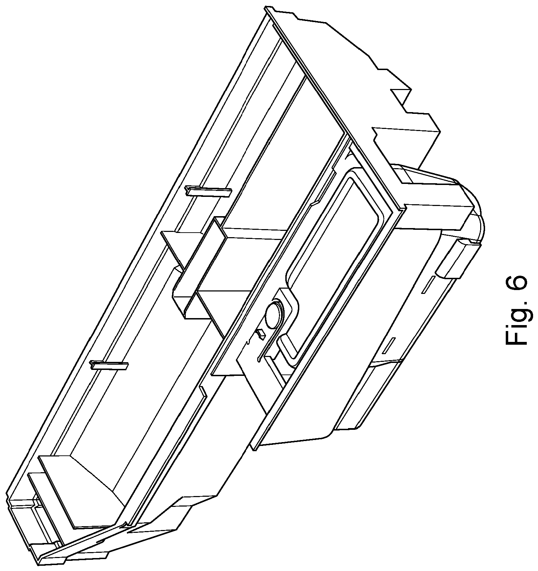

Fig. 6 is a view similar to Fig. 5 showing the storage module in its final position.

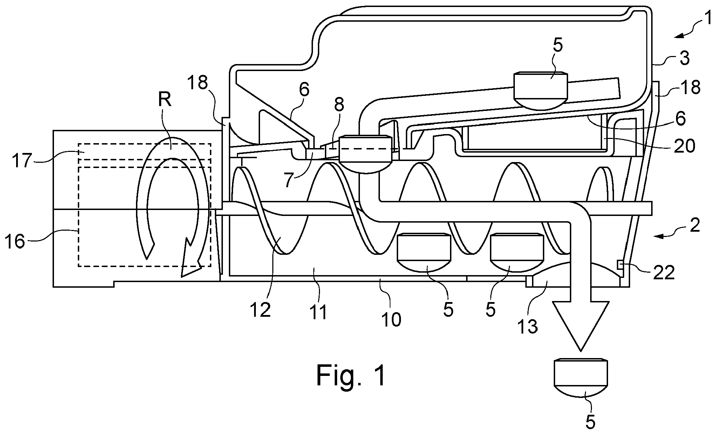

As shown in Fig. 1, the dispensing mechanism consists of two main components namely a storage module 1 and a dispensing module 2 which are connected one above the other as shown in Fig. 1.

The dispensing module 1 comprises a housing 3 containing a plurality of tablets 5 (in this case 40) of detergent. These may have any suitable shape but are shown in the present example as having a curved bottom which enables them the move more easily within the storage module 1. They may also have a substantially spherical shape so that they roll.

The housing 3 has a sloped floor 6 which is sloped towards an opening 7 via which the tablets 5 are selectively dropped into the dispensing module 2.

Prior to being placed in the position shown in Fig. 1, the opening 7 is closed by a pierceable membrane 8 depicted schematically in a dashed line in Fig. 1.

The dispensing module 2 has a housing 10 which defines a screw chamber 11 containing a screw dispenser (12). The screw dispenser 12 is mounted to rotate about a horizontal axis in the direction of the arrow R such that rotation of the screw dispenser 12 will push a tablet 5 to the right as shown in Fig 1.

The housing further comprises a dispensing opening 13 in the lowermost face of the housing 3 through which a tablet 5 can be dropped out of the dispensing module 2 and into the washing machine.

The dispensing module 2 has a hook 14 for an attachment to a corresponding lip in the drawer D of the washing machine. A similar hook may be present on the opposite side. Alternatively a number of other engaging features maybe provided which will mate with corresponding features in the drawer D. These may include recesses in the dispensing module 2, or the dispensing module 2 being an interference fit within the drawer.

Towards the end of the dispensing module 2 opposite to the dispensing opening 13 is a motor housing 15 which houses a motor 16 powered by a battery 17.

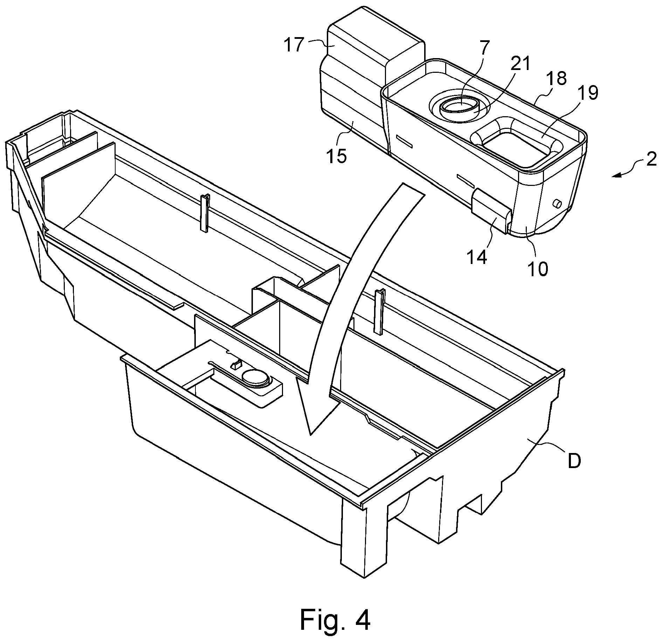

The upper surface of the dispensing module 2 is provided with a number of engagement features to locate with respect to the storage module 1. These include an upstanding lip 18 which surrounds the periphery of the lower portion of the storage module 1. There is also a recess 19 which locates with respect to a downwardly depending skirt 20 in the bottom of the storage module 1. The piercing member 21, in the form of an upstanding boss with a sharp upper edge, projects upwardly from the top of the module 2 and surrounds the opening 7. As is apparent from Figs. 1 and 4, this projects to a greater extent on one side of opening 7 so that it progressively engages with a small part of the membrane 8 at any one time thereby facilitating the cutting process. It may also be configured to follow the line of the sloped floor 6. In Fig. 1, it is shown with a lip projecting slightly above the floor 6 on the right hand side but, in practice, this lip may be eliminated.

In an alternative example, the dispensing module 2 may be built into the washing machine, for example, in the drawer. In this case, the dispensing module 2 will be provided with an upper surface similar to that described to engage with the storage module 1 which will be attachable in the same way. However, rather than having an on board power supply, it may be powered from the power supply of the washing machine.

A sensor 22 which is, for example, an optical sensor, IR sensor or a contact switch is provided adjacent to the opening 13 to detect when a tablet has been dropped from the opening 13. This is connected to a controller (not shown) which can be programmed to dispense a certain amount of tablets and can then switch off the motor 16 once the sensor 22 determines that the desired number of tablets have been dispensed. The sensor 22 and controller are powered by the battery 17.

The controller may also be provided with remote communication via, for example, WIFI or Bluetooth to allow it to communicate with a washing machine controller or a user interface such as a smartphone.

In order to use the device, in the case of the stand-alone device according to the present example, the dispensing module 2 is first inserted into the drawer D of the washing machine as shown in Fig. 4. The hook 14 engages with a lip on the drawer in order to retain the dispensing module 2 firmly in place.

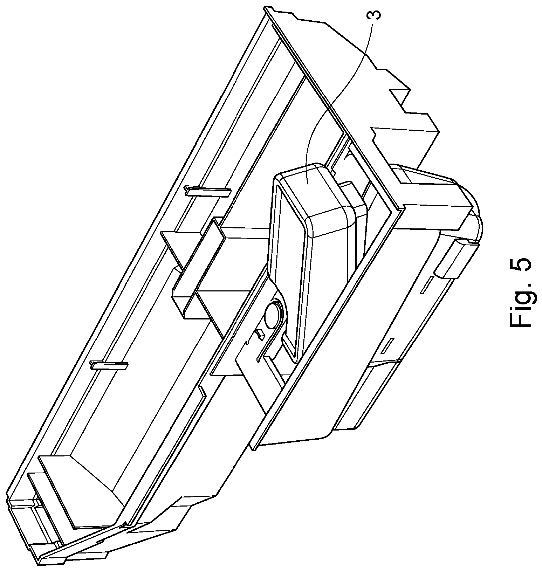

The storage module 1 is then inserted as shown in Fig. 5 with the leading edge being inserted first as shown in Fig. 5 before the opposite end is pushed into place. Particularly when the dispensing mechanism, is used for the first time, the dispensing module 2 and storage module 1 may alternatively be assembled together before being placed in the drawer.

The uniting of the storage module 1 and dispensing module 2 causes the piercing mechanism 21 to pierce the film 8 thereby allowing a first tablet 5 to drop into the dispensing module 2 and onto the screw dispenser 12. It should be noted that the film 8 is a very thin membrane which is intended to be almost completely severed by the piercing mechanism 21, but which remains attached only by a small portion of the periphery of the opening 7 such that it does not drop into the dispensing module 2. The membrane 8 is very thin such that it will not prevent the tablets 5 from passing through the opening 7.

When a tablet 5 is to be dispensed, this may be determined by the controller from a remote signal or may be determined in some other way such as by determining the passage of a certain amount of time from the beginning of the machine cycle or may be manually activated by a user operable switch. The number and timing of the tablets dispensed will depend to a large extent on the size of the load and the washing program selected by the user. The motor 16 will then rotate the screw dispenser 12 driving the tablets 5 to the right as shown in Fig. 1 until one reaches the opening 13 whereupon it will drop through the opening. This is detected by the sensor 22. If further tablets are required, the motor 16 continues to rotate the screw dispenser 12 until the required number are dispensed. Otherwise, the controller determines that the dispensing operation is complete for the time being it will stop the operation of the motor 16.

The dispensing mechanism is preferably provided with a means of determining when the storage module 1 is empty. This may be done, for example, by the sensor 22 counting the total dose which has been dispensed since the storage module was fitted. Alternatively it may be caused by the sensor 22 determining that no tablets are being dispensed even though the screw dispenser 12 is being turned. This empty status may be communicated to the user via an alarm such as a light or sound, or as a communication with the user interface via the wireless connection.

The storage module 1 is then removed and is replaced by a full one and the above operation is then repeated.

A typical formulation for the tablet is as follows:
Bleach: Sodium Percarbonate
Bleach activator: TAED, Tetraacetylethylenediamine
Enzymes: Protease, mannanase, lipase, pectinase, cellulose
Surfactants: non-ionic and anionic
Tableting agents: PEG6000, microcrystal cellulose, talcum
Dissolution agent: Citric acid

Independently of the formulation, each tablet preferably has a volume of 800 to 2500 mm³, and preferably 850 to 2200 mm³. Each tablet preferably has a mass of 1 to 4g.

## Claims

1. A dispensing mechanism for dispensing tablets of a washing product into a washing machine, the dispensing mechanism comprising:
a storage module (1) containing a plurality of tablets (5) of washing product; and
a dispensing module (2) for selectively dispensing the tablets (5) from the storage module (1); the storage module (1) having an opening (7) in its lowermost surface and an inclined floor to cause the tablets to move towards the opening (7) under gravity;
the dispensing module (2) having a screw dispenser (12) and a motor (16) to selectively rotate the screw dispenser (12) to convey tablets (5) from a position beneath the opening (7) to an outlet opening (13) via which they are expelled from the dispensing module (2),
**characterised in that** the storage module (1) is releasably attachable, in use, to the top of the dispensing module (2).

2. A dispensing mechanism according to claim 1, wherein the dispensing mechanism is a stand-alone cartridge which can be placed into the drawer of a washing machine.

3. A dispensing mechanism according to claim 2, wherein the dispensing module (2) is provided with an attachment means (14) for attachment to the washing machine.

4. A dispensing mechanism according to any preceding claims, wherein the opening (7) in the storage module (1) is provided with a closure.

5. A dispensing mechanism according to claim 4, wherein the closure is provided by the opening being covered by a pierceable membrane (8) and the dispensing module (2) is provided with a piercing element (21) to pierce the membrane (8).

6. A dispensing mechanism according to claim 5, wherein the piercing member (21) is in the form of a raised edge surrounding the opening (7).

7. A dispensing mechanism according to claim 6, wherein the raised edge extends further on one side of the opening (7) than the other so as to provide a progressive cutting effect on the membrane (8).

8. A dispensing mechanism according to any preceding claims, wherein a sensor (22) is provided to detect the number of tablets (5) which have actually been dispensed.

9. A dispensing mechanism according to any preceding claims, further comprising a battery (17) to provide power to the motor (16).

10. A dispensing mechanism according to any preceding claims, connectable to a remote device

11. A dispensing mechanism according to any preceding claims, wherein the tablets (5) are sized to require several per washing cycle.

12. A dispensing mechanism according to claim 11, wherein each tablet (5) has a volume of between 800 and 2500 mm³.

13. A dispensing mechanism according to any preceding claims, comprising two or more storage modules (1) each having an associated dispensing module (2), wherein each storage module (1) contains a different washing product.

## Patentansprüche

1. Abgabemechanismus zur Abgabe von Tabletten eines Waschmittels in eine Waschmaschine, wobei der Abgabemechanismus umfasst:
ein Aufbewahrungsmodul (1), das eine Vielzahl von Tabletten (5) eines Waschmittels enthält; und
ein Abgabemodul (2) zur selektiven Abgabe der Tabletten (5) aus dem Aufbewahrungsmodul (1); wobei das Aufbewahrungsmodul (1) eine Öffnung (7) in seiner untersten Fläche und einen geneigten Boden aufweist, um zu bewirken, dass sich die Tabletten unter Einwirkung der Schwerkraft zur Öffnung (7) bewegen;
wobei das Abgabemodul (2) einen Schneckenspender (12) und einen Motor (16) aufweist, um den Schneckenspender (12) selektiv zu drehen, um Tabletten (5) von einer Position unterhalb der Öffnung (7) zu einer Auslassöffnung (13) zu befördern, über die sie aus dem Abgabemodul (2) ausgestoßen werden,
**dadurch gekennzeichnet, dass** das Aufbewahrungsmodul (1) im Gebrauch lösbar an der Oberseite des Abgabemoduls (2) anbringbar ist.

2. Abgabemechanismus nach Anspruch 1, wobei der Abgabemechanismus eine eigenständige Kartusche ist, die in einem Schubfach einer Waschmaschine platziert werden kann.

3. Abgabemechanismus nach Anspruch 2, wobei das Abgabemodul (2) mit einem Befestigungsmittel (14) zur Befestigung an der Waschmaschine versehen ist.

4. Abgabemechanismus nach einem der vorhergehenden Ansprüche, wobei die Öffnung (7) in dem Aufbewahrungsmodul (1) mit einem Verschluss versehen ist.

5. Abgabemechanismus nach Anspruch 4, wobei der Verschluss dadurch bereitgestellt wird, dass die Öffnung von einer durchstechbaren Membran (8) bedeckt ist und das Abgabemodul (2) mit einem Durchstechelement (21) zum Durchstechen der Membran (8) versehen ist.

6. Abgabemechanismus nach Anspruch 5, wobei das Durchstechelement (21) die Form einer erhöhten Kante hat, die die Öffnung (7) umgibt.

7. Abgabemechanismus nach Anspruch 6, wobei sich die erhöhte Kante auf einer Seite der Öffnung (7) weiter erstreckt als auf der anderen, um so eine fortschreitende Schneidwirkung auf die Membran (8) zu erzielen.

8. Abgabemechanismus nach einem der vorhergehenden Ansprüche, wobei ein Sensor (22) vorgesehen ist, um die Anzahl der tatsächlich abgegebenen Tabletten (5) zu erfassen.

9. Abgabemechanismus nach einem der vorhergehenden Ansprüche, ferner umfassend eine Batterie (17), um den Motor (16) mit Energie zu versorgen.

10. Abgabemechanismus nach einem der vorhergehenden Ansprüche, der mit einer entfernten Vorrichtung verbunden werden kann.

11. Abgabemechanismus nach einem der vorhergehenden Ansprüche, wobei die Tabletten (5) so bemessen sind, dass mehrere pro Waschgang erforderlich sind.

12. Abgabemechanismus nach Anspruch 11, wobei jede Tablette (5) ein Volumen zwischen 800 und 2500 mm³ aufweist.

13. Abgabemechanismus nach einem der vorhergehenden Ansprüche, umfassend zwei oder mehr Aufbewahrungsmodule (1), denen jeweils ein Abgabemodul (2) zugeordnet ist, wobei jedes Aufbewahrungsmodul (1) ein unterschiedliches Waschmittel enthält.

## Revendications

1. Mécanisme de distribution pour distribuer des tablettes d'un produit de lavage dans une machine à laver, le mécanisme de distribution comprenant :
un module de stockage (1) contenant une pluralité de tablettes (5) de produit de lavage ; et
un module de distribution (2) pour distribuer sélectivement les tablettes (5) provenant du module de stockage (1) ; le module de stockage (1) ayant une ouverture (7) dans sa surface la plus basse et un fond incliné pour amener les tablettes à se déplacer vers l'ouverture (7) par gravité ;
le module de distribution (2) ayant un distributeur à vis (12) et un moteur (16) pour faire tourner sélectivement le distributeur à vis (12) afin de transporter des tablettes (5), d'une position sous l'ouverture (7) à une ouverture de sortie (13) par laquelle ils sont expulsés du module de distribution (2),
**caractérisé en ce que** le module de stockage (1) peut être fixé de manière amovible, lors de l'utilisation, au sommet du module de distribution (2).

2. Mécanisme de distribution selon la revendication 1, dans lequel le mécanisme de distribution est une cartouche autonome qui peut être placée dans le tiroir d'une machine à laver.

3. Mécanisme de distribution selon la revendication 2, dans lequel le module de distribution (2) est pourvu d'un moyen de fixation (14) destiné à être fixé à la machine à laver.

4. Mécanisme de distribution selon l'une quelconque des revendications précédentes, dans lequel l'ouverture (7) dans le module de stockage (1) est pourvue d'une fermeture.

5. Mécanisme de distribution selon la revendication 4, dans lequel la fermeture est assurée par l'ouverture recouverte d'une membrane perçable (8) et le module de distribution (2) est pourvu d'un élément de perçage (21) pour percer la membrane (8).

6. Mécanisme de distribution selon la revendication 5, dans lequel l'élément de perçage (21) se présente sous la forme d'un bord relevé entourant l'ouverture (7).

7. Mécanisme de distribution selon la revendication 6, dans lequel le bord relevé s'étend plus d'un côté de l'ouverture (7) que de l'autre de manière à fournir un effet de coupe progressif sur la membrane (8).

8. Mécanisme de distribution selon l'une quelconque des revendications précédentes, dans lequel un capteur (22) est prévu pour la détection du nombre de tablettes (5) qui ont effectivement été distribués.

9. Mécanisme de distribution selon l'une quelconque des revendications précédentes, comprenant en outre une batterie (17) pour alimenter le moteur (16).

10. Mécanisme de distribution selon l'une quelconque des revendications précédentes, pouvant être connecté à un dispositif à distance.

11. Mécanisme de distribution selon l'une quelconque des revendications précédentes, dans lequel les tablettes (5) sont dimensionnés pour que plusieurs d'entre eux soient nécessaires pour chaque cycle de lavage.

12. Mécanisme de distribution selon la revendication 11, dans lequel chaque comprimé (5) a un volume compris entre 800 et 2 500 mm³.

13. Mécanisme de distribution selon l'une quelconque des revendications précédentes, comprenant au moins deux modules de stockage (1) ayant chacun un module de distribution (2) associé, dans lequel chaque module de stockage (1) contient un produit de lavage différent.
